# EUROPEAN PATENT SPECIFICATION

(11) **EP 1 808 317 B1**
(45) Date of publication and mention of the grant of the patent: **17.03.2010**
(21) Application number: 07000791.9
(22) Date of filing: 16.01.2007
(51) Int. Cl.: B60H 1/32

(54) **Method for controlling compressor clutch**
Verfahren zur Steuerung einer Verdichterkupplung
Procédé de commande pour un embrayage d'un compresseur

(30) Priority: 16.01.2006 JP 2006007598
(43) Date of publication of application: 18.07.2007
(73) Proprietor: Calsonic Kansei Corporation, Tokyo 164-8602 (JP)
(72) Inventor: Higashihara, Shinichiro c/o Calsonic Kansei Corporation, Nakano-ku Tokyo 164-8602 (JP)
(74) Representative: Grünecker, Kinkeldey, Stockmair & Schwanhäusser Anwaltssozietät

(56) References cited:
- EP-A- 1 609 642
- JP-A- 5 096 936
- JP-A- 57 073 877

## Description

This application is based upon and claims the benefit of priority from the prior Japanese Patent Application No. 2006-007598, filed on January 16th, 2006; published as No. 2007-187131.

### BACKGROUND OF THE INVENTION

### 1. Field of the Invention

The present invention relates a method for controlling an electromagnetic clutch of a variable capacity compressor.

### 2. Description of the Related Art

An electromagnetic clutch of a variable capacity compressor has been put to actual use. The electromagnetic clutch is configured to be turned on to transmit driving force from a vehicle engine to the compressor and to be turned off to disconnect the driving force of the vehicle engine from the compressor. The electromagnetic clutch includes an armature, a rotor, and an electromagnetic coil. The armature is fixed to a drive shaft of the compressor so that the armature and the drive shaft rotate together. The rotor is a pulley that is configured to be rotated by the vehicle engine. When the clutch is turned on, the electromagnetic coil is energized to connect the armature to the rotor so that driving force is transferred from the engine to the compressor to drive the compressor. When driven, the compressor inducts and compresses refrigerant and discharges the compressed refrigerant. Therefore, the compressor serves as a pump in a refrigeration cycle.

Japanese Patent Application Laid-Open No. 57-73877 discloses a control method for a variable capacity compressor. The control method firstly operates the compressor at 50% capacity within a predetermined time after starting the compressor, and then, operates the compressor at 100% capacity.

Document EP1609642 A1, which is considered to represent the most relevant state of the art, discloses a control method for an electromagnetic clutch of a variable capacity compressor configured to work in a refrigeration cycle, comprising the following method steps of
- calculating a load torque of the variable capacity compressor based on a discharge pressure and a rotational speed of the variable capacity compressor;
   and
- calculating a load torque of the variable capacity compressor based on an electric current of an electromagnetic control valve, a discharge pressure and a rotational speed of the variable capacity compressor.

### SUMMARY OF THE INVENTION

Load torque of a variable capacity compressor (that is, torque required to rotate the drive shaft of the compressor) changes according to operating conditions of the compressor. Accordingly, power of the electromagnetic clutch of the compressor is set to be larger than a maximum load torque of the compressor so as to positively engage the clutch even when the load torque is at a maximum value.

Conventionally, the power of the electromagnetic clutch is constant regardless of the operating conditions of the compressor.

An object of the present invention is to provide a method for controlling an electromagnetic clutch of a variable capacity compressor so as to allow downsizing of the electromagnetic coil of the electromagnetic clutch and to reduce power consumption of the electromagnetic clutch.

A first aspect of the present invention is a control method for an electromagnetic clutch of a variable capacity compressor working in a refrigeration cycle. The method includes: setting an electric current of an electromagnetic control valve to zero; when a predetermined time has pass after the setting step, calculating a load torque of the variable capacity compressor based on a discharge pressure and a rotational speed of the variable capacity compressor; determining whether or not the load torque is greater than the power of the electromagnetic clutch; engaging the electromagnetic clutch when the load torque is smaller than the power of the electromagnetic clutch; and when the load torque is greater than the power of the electromagnetic clutch, increasing air flow rate from a fan to a condenser in the refrigeration cycle and then returning to the calculating step.

A second aspect of the present invention is a control method for an electromagnetic clutch of a variable capacity compressor working in a refrigeration cycle. The method includes: calculating a load torque of the variable capacity compressor based on an electric current of an electromagnetic control valve, a discharge pressure and a rotational speed of the variable capacity compressor; determining whether the load torque is larger than the power of the electromagnetic clutch; engaging the electromagnetic clutch when the load torque is smaller than the power of the electromagnetic clutch; and when the load torque is greater than the power of the electromagnetic clutch, increasing air flow rate from a fan to a condenser in the refrigeration cycle and then returning to the calculating step.

### BRIEF DESCRIPTION OF THE DRAWINGS

Fig. 1 is a diagrammatic view showing a vehicular air conditioner according to a first embodiment of the present invention;
Fig. 2 is a cross-sectional view showing an electromagnetic clutch used for a variable capacity compressor in the vehicular air conditioner according to the first embodiment of the present invention;
Fig. 3 is a flow chart showing a method for controlling the electromagnetic clutch of the variable capacity compressor according to the first embodiment of the present invention;
Fig. 4 is a diagram showing a characteristic of load torque of the variable capacity compressor, and
Fig. 5 is a flow chart showing a method for controlling an electromagnetic clutch of a compressor according to a second embodiment of the present invention.

### DETAILED DESCRIPTION OF THE INVENTION

An air conditioner having a refrigeration cycle according to embodiments of the present invention will be explained.

### (First embodiment)

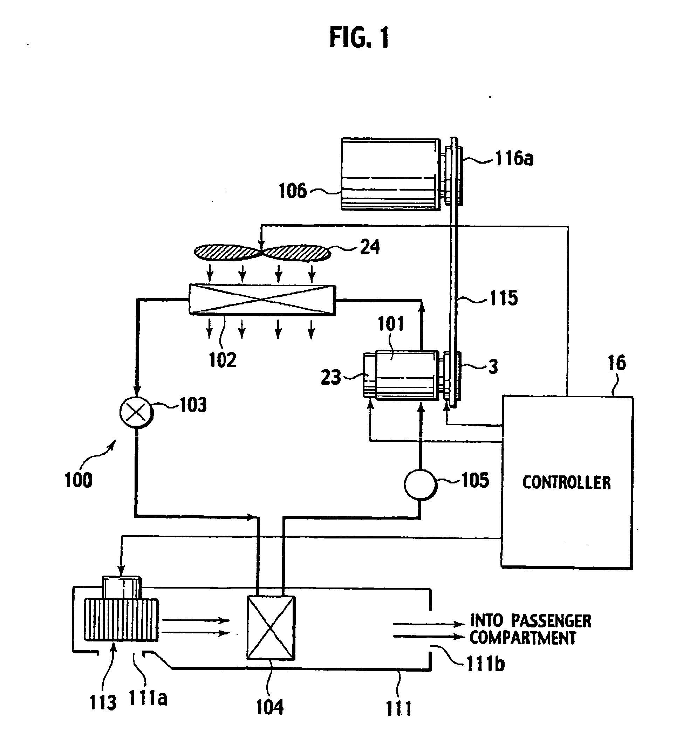

Fig. 1 is a schematic diagram of the vehicular air conditioner according to a first embodiment. As shown in Fig. 1, the air conditioner of the present embodiment is a vehicle air conditioner installed in a vehicle and includes a refrigeration cycle 100 that circulates refrigerant and conducts heat exchange between the refrigerant and air

Elements providing operation of the refrigeration cycle 100 include a variable capacity compressor 101, a condenser 102, an expansion valve 103, an evaporator 104, and a liquid tank 105. The components 101 to 105 are connected in series through conduits. The compressor 101 supplies kinetic energy to the refrigerant so that the refrigerant is successively circulated through the components 101 to 105.

The compressor 101 is arranged outside of a passenger compartment of the vehicle. For example, the compressor 101 is arranged in an engine compartment. An engine 106 generates torque, which is transmitted through an endless belt 115 to the compressor 101, to drive the compressor 101.

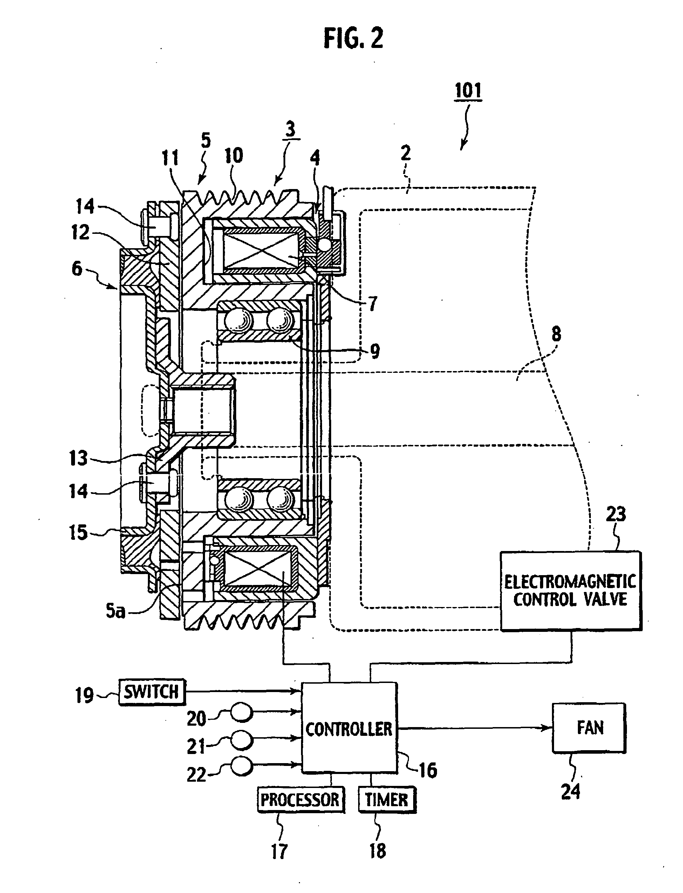

A main pulley 106a and a sub pulley 5 (see Fig. 2) are connected by the endless belt 115. The main pulley 106a rotates together with a drive shaft of the engine 106. The sub pulley 5 is rotatably attached to a housing 2 (see Fig. 2) of the compressor 101. With this structure, the pulley 5 rotates when the engine 106 is driven. An electromagnetic clutch 3 of the compressor 101 is disposed between a drive shaft 8 (see Fig. 2) of the compressor 101 and the pulley 5, When an electric current is applied to the electromagnetic clutch 3, the pulley 5 and the drive shaft 8 of the compressor 101 rotate together so as to operate the compressor 101.

The compressor 101, in operation, takes in a low-pressure refrigerant from the liquid tank 105, compresses the refrigerant, and discharges a high-temperature, high-pressure gaseous refrigerant to the condenser 102.

The condenser 102 is arranged outside the passenger compartment and radiates heat of the high-temperature, high-pressure gaseous refrigerant discharged from the compressor 101 to outside air. The condenser 102 is provided with a blower, such as an electric fan, to blow outside air toward the condenser 102. Heat is exchanged between the refrigerant passing through the condenser 102 and the outside air, to dissipate the heat of the refrigerant.

The expansion valve 103 receives the high-pressure refrigerant from the condenser 102, reduces the pressure thereof (i.e., expands the volume thereof) and provides a low-temperature, low-pressure refrigerant .

The evaporator 104 is arranged in an air conditioning duct 111. In the duct 111, an air conditioning fan 113 generates air conditioning airflow. Heat of the airflow is absorbed by the low-temperature, low-pressure misty refrigerant supplied from the expansion valve 103 and passes through the evaporator 104. Namely, the refrigerant passing through the evaporator 104 evaporates to take heat away from the airflow passing through the duct 111. The heat-deprived airflow in the duct 111 is dehumidified to be a cool airflow, which is blown through an outlet 111b into the passenger compartment

The liquid tank 105 separates the refrigerant discharged from the evaporator 104 into liquid refrigerant and gaseous refrigerant. The separated liquid refrigerant is accumulated and the separated gaseous refrigerant is supplied to the compressor 101.

### [Capacity of the compressor]

The compressor 101 of the present embodiment is capable of variable capacity operation according to an electric current I_{ECV} of an electromagnetic control valve 23 (ECV) of the compressor 101. When the electric current I_{ECV} of the electromagnetic control valve 23 is set to 0, which is a minimum value, the compressor 101 operates at a minimum capacity and, when the electric current I_{ECV} is set to a maximum value, the compressor 101 operates at a maximum capacity.

### [Load torque of the compressor]

Load torque Tᵣ of the compressor 101 changes according to compressor capacity, number of revolutions Nc, and discharge pressure Pd of the compressor 101.

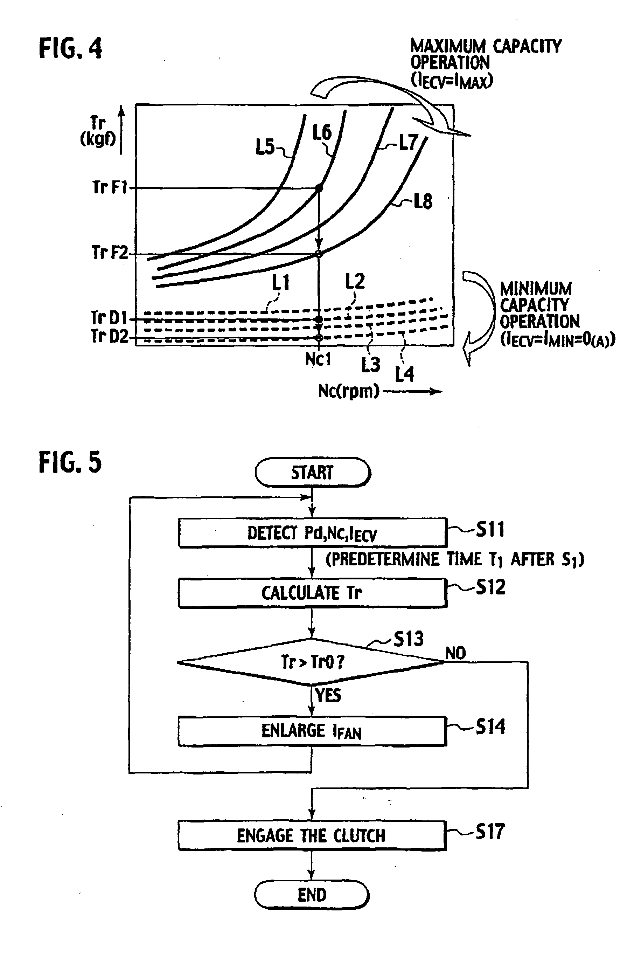

For example, when the compressor 101 starts in a state that the electric current I_{ECV} of the electromagnetic control valve 23 is maximum, the compressor 101 is activated in a maximum capacity operation. Accordingly, the load torque Tr of the compressor 101 is estimated based on load torque estimation lines (L5, L6, L7, L8 ...) showing load torque Tr in the maximum capacity operation in Fig. 4. In more detail, when the discharge pressure Pd of the compressor 101 is 20 kg/cm² in the maximum capacity operation, the load torque Tr changes as shown in the continuous line L5 in Fig. 4. When the discharge pressure Pd of the compressor 101 is 15 kg/cm² in the maximum capacity operation, the load torque Tr changes as shown in the continuous line L6 in Fig. 4. When the discharge pressure Pd of the compressor 101 is 10 kg/cm² in the maximum capacity operation, the load torque Tr changes as shown in the continuous line L7 in Fig. 4. When the discharge pressure Pd of the compressor 101 is 5 kg/cm² in the maximum capacity operation, the load torque Tr changes as shown in the continuous line L8 in Fig. 4.

For example, when the compressor 101 starts in a state in which the electric current I_{ECV} of the electromagnetic control valve 23 is a minimum, the compressor 101 is activated in a minimum capacity operation. Accordingly, the load torque Tr of the compressor 101 is estimated based on load torque estimation lines (L1, L2, L3, L4....) showing load torque Tr in the minimum capacity operation in Fig. 4. In more detail, when the discharge pressure Pd of the compressor 101 is 20 kg/cm² in the minimum capacity operation, the load torque Tr changes as shown in the dashed line L1 in Fig. 4. When the discharge pressure Pd of the compressor 101 is 15 kg/cm², 10 kg/cm², and 5 kg/cm² in the maximum capacity operation, the load torque Tr changes as shown in the dashed lines L2, L3, and L4 in Fig. 4, respectively in order.

### [Example 1]

When the electromagnetic clutch 3 is to be engaged in a condition in which the electric current I_{ECV} of the electromagnetic control valve ECV 23 is a maximum value Iₘₐₓ and the discharge pressure Pd of the compressor 101 is 15 kg/cm² and the number of revolutions Nc is Nc1, then, the load torque Tr of the compressor 101 is TrF1 on line L6 in Fig. 4.

And in a condition where the clutch power Tr0 of the electromagnetic clutch 3 is TrF2 in Fig. 4, if the discharge pressure Pd of the compressor 101 is reduced to less than 5 kg/cm², the load torque Tr of the compressor 101 will be smaller than the clutch power Tr0 of the electromagnetic clutch 3, so that the electromagnetic clutch 3 can be engaged against the load torque of the compressor 101.

### [Example 2]

When the electromagnetic clutch is to be engaged in a condition in which the electric current I_{ECV} at the electromagnetic control valve 23 is a minimum value Iₘᵢₙ and the discharge pressure Pd of the compressor 101 is 15 kg/cm² and the number of revolutions Nc is Nc1, then, the load torque Tr of the compressor 101 is TrD1 on line L2 in Fig. 4.

And in a condition where the clutch power Tr0 of the electromagnetic clutch 3 is TrD2, if the discharge pressure Pd of the compressor 101 is reduced to less than 5 kg/cm² the load torque Tr of the compressor 101 will be smaller than the clutch power Tr0 of the electromagnetic clutch 3, so that the electromagnetic clutch 3 can be engaged against the load torque of the compressor101.

### [Control method]

The method for controlling the electromagnetic clutch of the variable capacity compressor according to the first embodiment will be described in detail.

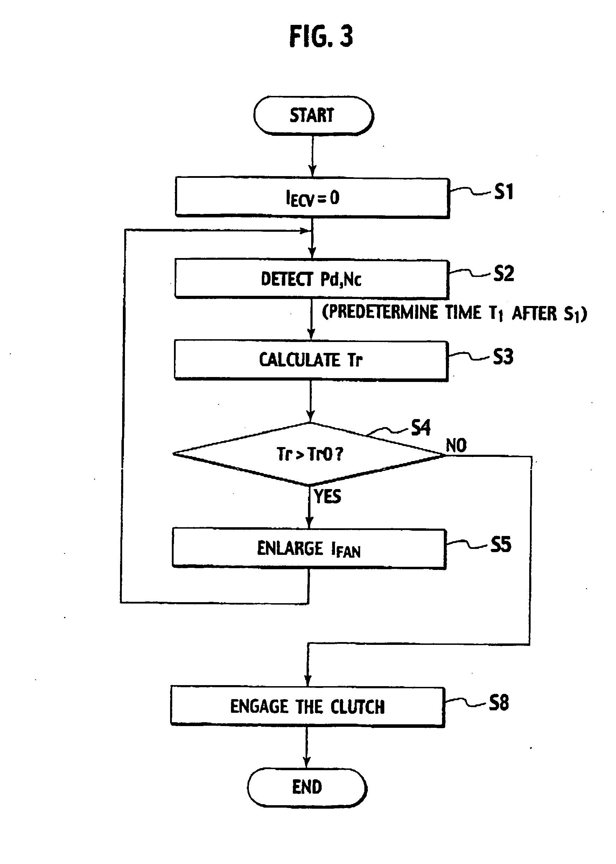

Fig. 2 is an explanatory diagram showing a structure of the electromagnetic clutch, Fig. 3 is a flow chart showing the method for controlling the electromagnetic clutch of the variable capacity compressor of the first embodiment, and Fig. 4 is a diagram showing a characteristic of load torque of the variable capacity compressor.

The electromagnetic clutch 3 of the compressor 101 is used for transferring or disconnecting driving force from the vehicle engine 106 to or from the compressor 1.

The electromagnetic clutch 3 is attached to the housing 2 of the compressor 101. The electromagnetic clutch 3 includes a coil 4, the pulley 5 acting as a rotor, and an armature 6. The coil 4 has an electromagnetic coil 7 which is fastened to the housing 2. The rotor 5 is rotatably supported by the housing 2 of the compressor 1 with a bearing 9. The rotor has a recess 10 on its outer surface to receive the V-belt 115. The rotor 5 has a recess 11 in which the coil 4 is contained. The armature 6 is fixed to the driving shaft 8 of the compressor 101. The armature 6 includes an armature plate 12, a hub 13, and a connecting plate 15. The armature plate 12 is to be in contact with a contact face 5a of the rotor 5. The hub 13 is connected to the rotating shaft 8. The connecting plate 15 is connected to both of the armature plate 12 and the hub 13 via a rivet 14.

A controller 16 for controlling the electromagnetic clutch 3 includes a calculator 17 and a timer 18. The controller 16 is electrically connected to a switch 19 of a vehicular air conditioner, a sensor 20, a sensor 21, a sensor 22, the electromagnetic control valve 23, and an electric fan 24. The sensor 20 detects discharge pressure Pd of the compressor 101. The sensor 21 detects the number of revolutions Nc (that is, the number of revolutions of the rotor 5) of the compressor 1. The sensor 22 detects electric current I_{ECV} of the electromagnetic control valve 23 of the compressor 101. The electromagnetic control valve 23 controls the capacity of the compressor 101. The electric fan 24 cools the condenser 102 by blowing air to the condenser 102.

When the controller 16 operates to energize the electromagnetic coil 7, the magnetic force of the electromagnetic coil 7 pulls the armature plate 12 to the contacting face 5a of the rotor 5 so that the rotor 5 and the armature 6 are connected. As a result, the rotor 5 and the drive shaft 8 of the compressor 101 rotate together. This brings the compressor 101 into operation. Then, when the operation switch 19 is turned off, the electromagnetic coil 7 is not magnetized so that the connection of the rotor 5 and the armature 6 is released. As a result, since the driving force of the vehicle engine is not transferred from the rotor 5 to the armature 6, the compressor 101 stops operation.

In the method for controlling the electromagnetic clutch of the first embodiment, an engagement of the electromagnetic clutch 3 is implemented according to the procedure shown in Fig. 3.

Upon receiving an instruction from the switch 19 of the vehicular air conditioner or other controller to engage the electromagnetic clutch, the controller 16 starts the procedure.

Firstly, in step S1, the electric current I_{ECV} of the electromagnetic control valve 23 is set as 0. Then, the controller 16 measures the time by the timer 18. When a predetermined time T1 (in this example, T1=2 seconds) has passed after the electric current of the electromagnetic control valve 23 is set as 0, the controller16 proceeds to step S2. In step S2, the discharge pressure Pd and the number of revolutions Nc of the compressor 101 is detected by the sensors 20, 21. It is noted that the drive shaft 8 of the compressor 101 is not rotate in step S2, the number of revolutions Nc of the compressor is calculated by and equal to the number of the revolutions of the rotor 5. If the electromagnetic clutch 3 is energized to engage when the predetermined time T1 has elapsed after the electric current I_{ECV} at the electromagnetic control valve 23 is set as 0, the compressor 101 is started in a minimum capacity operation. Thus, the load torque Tr at the time of engaging the electromagnetic clutch 3 can be estimated based on the load torque estimation lines L1, L2, L3 and L4 in the minimum capacity operation (Fig. 4), obtained by experiments in advance,.

In step S3, the load torque Tr is estimated by the calculator 17 based on the detection results (Nc, Pd). That is, the controller 16 estimates load torque Tr by inputting the number of revolutions Nc and the discharge pressure Pd of the compressor 101 into the load torque estimation line (Fig. 4).

In step S4, the controller 16 determines whether or not the load torque Tr is smaller than the clutch power Tr0 of the electromagnetic clutch 3, i.e., the engaging force Tr0 of the electromagnetic clutch 3.

When the load torque Tr is greater than the clutch power Tr0 of the electromagnetic clutch 3 in step 4, driving current I_{fan} of the electric fan 24 is increased so as to increase airflow generated by the electric fan 24 in step S5, and then, the controller 16 goes back to step S2. As the airflow of the electric fan 24 is increased, the discharge pressure Pd of the compressor 101 is decreased so that the load torque Tr is decreased. Steps S2 to S5 are repeated until the load torque Tr becomes smaller than the clutch power Tr0 of the electromagnetic clutch 3. When the controller 16 determines that the load torque Tr is smaller than the clutch power Tr0 of the electromagnetic clutch 3 in step 4, the controller 16 proceeds to step S8 and the coil 4 is energized.

As described above, in the control method according to the first embodiment, the electromagnetic clutch 3 is engaged after the load torque Tr is made smaller than the clutch power Tr0 of the electromagnetic clutch 3. Accordingly, the drive shaft 8 of the compressor 101 and the pulley 5, acting as a rotor, can be securely connected even when the clutch power Tr0 of the electromagnetic clutch 3 is small. In addition, the electromagnetic coil 7 can be downsized and power consumption is reduced.

It is noted that since the airflow from the electric fan 24 for cooling the condenser is increased, the heat exchange ability of the condenser can be maintained even when the discharge pressure Pd of the compressor 101 is decreased.

### (Second embodiment)

Fig. 5 is a flow chart showing a method for controlling a clutch of a compressor according to a second embodiment of the present invention. In the second embodiment, the basic structure is the same as that of the first embodiment, so description of the same structure is omitted here.

According to the clutch control method of the second embodiment shown in Fig. 5, it is different from the first embodiment in that it is not required set the electric current T_{ECV} of an electromagnetic control valve 23 to 0, as in the first embodiment. Further, the clutch control method of the second embodiment is different from the first embodiment in that load torque Tr is estimated based on discharge pressure Pd of a compressor 101, number of revolutions Nc of the compressor 101, and electric current I_{ECV} of the electromagnetic control valve 23.

According to the method for controlling the electromagnetic clutch 3 in the variable capacity compressor 101 of the second embodiment, the electromagnetic clutch 3 is engaged by the following steps.

Upon receiving an instruction for engaging the electromagnetic clutch 3 from a switch 19 of a vehicular air conditioner or other controllers, a controller 16 starts the procedure.

Firstly, in step S11, the discharge pressure Pd of the compressor 101, the number of revolutions Nc of the compressor 101 and the electric current I_{ECV} of the electromagnetic control valve 23 are detected. It is noted that the drive shaft 8 of the compressor 101 is not rotating in step S11, the number of revolutions Nc of the compressor is calculated by the number of the revolutions of the rotor 5.

Then, in step S12, the calculator 17 calculates load torque Tr based on the detection results (Pd, Nc, and I_{ECV}). In step S13, the controller 16 determines whether or not the load torque Tr is smaller than the clutch power Tr0 of the electromagnetic clutch 3. When the controller 16 determines that the load torque Tr is greater than the clutch power Tr0 of the electromagnetic clutch 3 in step S 13, the controller 16 proceeds to step S14. When the controller 16 determines that the load torque Tr is smaller than the clutch power Tr0 of the electromagnetic clutch 3 in step S 13, the controller 16 proceeds to step S17 to engage the electromagnetic clutch 3. In case the controller goes to step S14, the driving current I_{fan} of an electric fan 24 is increased in step S15 and then the controller goes back to step S 12. As the driving current I_{fan} of the electric fan 24 is increased, airflow of the electric fan 24 is increased. Accordingly, the discharge pressure Pd of the compressor 101 is decreased so that load torque Tr of the compressor 101 is decreased. Steps S11 to S 14 are repeated until the load torque Tr of the compressor 101 becomes smaller than the clutch power Tr0 of the electromagnetic clutch 3.

According to such a method for controlling the electromagnetic clutch 3 in the variable capacity compressor 101, the electromagnetic clutch 3 can surely be engaged even when the clutch power Tr0 of the electromagnetic clutch 3 is small. In addition, the electromagnetic coil 7 can be downsized and power consumption is reduced, similar to the first embodiment.

The control method of the electromagnetic clutch of the compressor according to the present invention may be applied to an electromagnetic clutch of a compressor in a vehicular air conditioner. In addition, the control method can be applied to an electromagnetic clutch of a compressor in an air conditioner for general machinery, industrial machinery or the like in various fields.

Although the invention has been described above by reference to certain embodiments of the invention, the invention is not limited to the embodiments described above. Modification and variation of the embodiments can be made without departing from the scope of the appended claims. Therefore, the embodiments are only for illustrative purpose and not limit the invention.

## Claims

1. A control method for an electromagnetic clutch (3) of a variable capacity compressor (101) configured to work in a refrigeration cycle (100), comprising:
setting an electric current (I_{ECV}) of an electromagnetic control valve (23) to zero;
when a predetermined time (T1) pass after the setting step, calculating a load torque (Tr) of the variable capacity compressor based on a discharge pressure (Pd) and a rotational speed (Nc) of the variable capacity compressor;
determining whether the load torque (Tr) is greater than the power (Tr0) of the electromagnetic clutch;
engaging the electromagnetic clutch (3) when the load torque (Tr) is smaller than the electromagnetic clutch power (Tr0); and
when the load torque (Tr) is greater than the power (Tr0) of the electromagnetic clutch, increasing air flow from a fan (24) to a condenser (102) in the refrigeration cycle (100) and then returning to the calculating step.

2. A control method for an electromagnetic clutch (3) of a variable capacity compressor (101) configured to work in a refrigeration cycle, comprising:
calculating a load torque (Tr) of the variable capacity compressor (101) based on an electric current (I_{ECV}) of an electromagnetic control valve (23), a discharge pressure (Pd) and a rotational speed (Nc) of the variable capacity compressor (101);
determining whether the load torque (Tr) is larger than the power (Tr0) of the electromagnetic clutch;
engaging the electromagnetic clutch (23) when the load torque (Tr) is smaller than the power (Tr0) of the electromagnetic clutch; and
when the load torque (Tr) is greater than the power (Tr0) of the electromagnetic clutch, increasing air flow from a fan (24) to a condenser (102) in the refrigeration cycle (100) and the returning to the calculating step.

## Patentansprüche

1. Verfahren zum Steuern einer elektromagnetischen Kupplung (3) eines Kompressors (101) mit veränderbarer Kapazität, konfiguriert, um in einem Kältekreislauf (100) zu arbeiten, aufweisend:
Festlegen eines elektrischen Stromes (I_{ECV}) eines elektromagnetischen Steuerungsventiles (23) auf Null;
wenn eine vorbestimmte Zeit (T1) nach dem Festlegungsschritt vergangen ist, Berechnen eines Lastdrehmomentes (Tr) des Kompressors mit veränderbarer Kapazität auf der Grundlage eines Abgabedruckes (Pd) und einer Drehzahl (Ne) des Kompressors mit veränderbarer Kapazität;
Bestimmen, ob ein Lastdrehmoment (Tr) größer als die Leistung (Tr0) der elektromagnetischen Kupplung ist;
Einkuppeln der elektromagnetischen Kupplung (3), wenn das Lastdrehmoment (Tr) kleiner als die Leistung (Tr0) der elektromagnetischen Kupplung ist; und
wenn das Lastdrehmoment (Tr) größer als die Leistung (Tr0) der elektromagnetischen Kupplung ist, Erhöhen eines Luftstromes von einem Lüfter (24) zu einem Kühler (102) in dem Kältekreislauf (100) und dann Rückkehren zu dem Berechnungsschritt.

2. Verfahren zum Steuern einer elektromagnetischen Kupplung (3) eines Kompressors (101) mit veränderbarer Kapazität, konfiguriert, um in einem Kältekreislauf (100) zu arbeiten, aufweisend:
Berechnen eines Lastdrehmomentes (Tr) des Kompressors (101) mit veränderbarer Kapazität auf der Grundlage eines elektrischen Stromes(I_{ECV}) eines elektromagnetischen Steuerungsventiles (23), eines Abgabedruckes (Pd) und einer Drehzahl (Ne) des Kompressors mit veränderbarer Kapazität;
Bestimmen, ob das Lastdrehmoment (Tr) größer als die Leistung (Tr0) der elektromagnetischen Kupplung ist;
Einkuppeln der elektromagnetischen Kupplung (23), wenn das Lastdrehmoment (Tr) kleiner als die Leistung (Tr0) der elektromagnetischen Kupplung ist; und
wenn das Lastdrehmoment (Tr) größer als die Leistung (Tr0) der elektromagnetischen Kupplung ist, Erhöhen des Luftstromes eines Lüfters (24) zu einem Kühler (102) in dem Kältekreislauf (100) und dann Rückkehren zu dem Berechnungsschritt.

## Revendications

1. Procédé de commande pour un embrayage électromagnétique (3) d'un compresseur à capacité variable (101) configuré pour fonctionner dans un cycle de réfrigération (100), comprenant le fait de :
régler un courant électrique (Igcv) d'une de soupape de commande électromagnétique (23) à zéro ;
quand un temps prédéterminé (T1) s'est écoulé après l'étape de réglage, calculer un couple de charge (Tr) du compresseur à capacité variable d'après une pression de refoulement (Pd) et une vitesse de rotation (Nc) du compresseur à capacité variable ;
déterminer si le couple de charge (Tr) est plus grand que le couple transmis (Tr0) de l'embrayage électromagnétique ;
faire venir en prise l'embrayage électromagnétique (3) quand le couple de charge (Tr) est plus petit que le couple transmis (Tr0) de l'embrayage électromagnétique ; et
quand le couple de charge (Tr) est supérieur à le couple transmis (Tr0) de l'embrayage électromagnétique, augmenter le débit d'air d'un ventilateur (24) vers un condenseur (102) dans le cycle de réfrigération (100) et retourner ensuite à l'étape de calcul.

2. Procédé de commande pour un embrayage électromagnétique (3) d'un compresseur à capacité variable (101) configuré pour fonctionner dans un cycle de réfrigération (100), comprenant le fait de :
calculer un couple de charge (Tr) du compresseur à capacité variable (101) d'après un courant électrique (IECV) de la soupape de commande électromagnétique (23), une pression de refoulement (Pd) et une vitesse de rotation (Nc) du compresseur à capacité variable (101) ;
déterminer si le couple de charge (Tr) est plus grand que le couple transmis (Tr0) de l'embrayage électromagnétique ; et
faire venir en prise l'embrayage électromagnétique (23) quand le couple de charge (Tr) est plus petit que le couple transmis de l'embrayage électromagnétique ; et
quand le couple de charge (Tr) est supérieur à le couple transmis (Tr0) de l'embrayage électromagnétique, augmenter le débit d'air d'un ventilateur (24) vers un condensateur (102) dans le cycle de réfrigération (100) et retourner ensuite à l'étape de calcul.
